# NEUE EUROPÄISCHE PATENTSCHRIFT

(11) **EP 1 855 162 B2**
(45) Veröffentlichungstag und Bekanntmachung des Hinweises auf die Entscheidung über den Einspruch: **19.10.2016**
(45) Hinweis auf die Patenterteilung: 18.08.2010
(21) Anmeldenummer: 07106024.8
(22) Anmeldetag: 12.04.2007
(51) Int. Cl.: G03G 15/00, H04L 12/24, G06Q 10/00, G06F 11/00, G06F 11/273

(54) **Serviceplattform zur Wartung von Maschinen**
Service platform for machine maintenance
Plate-forme de services destinés à l'entretien de machines

(30) Priorität: 12.05.2006 DE 102006022710
(43) Veröffentlichungstag der Anmeldung: 14.11.2007
(73) Patentinhaber: Heidelberger Druckmaschinen AG, 69115 Heidelberg (DE)
(72) Erfinder: Haaf, Franz, 74889, Sinsheim-Weiler (DE); Oelsner, Tom, 64390 Erzhausen (DE)

(56) Entgegenhaltungen:
- EP-A- 1 206 088
- US-A- 5 303 005
- US-A- 5 335 048
- US-A- 5 680 541
- US-A- 6 006 045
- US-A1- 2002 073 356
- US-B1- 6 775 238

## Beschreibung

Die vorliegende Erfindung betrifft ein Verfahren zur Durchführung von Wartungs- oder Servicevorgaingen bei Maschinen gemäß Oberbegriff von Patentanspruch 1.

Maschinen bedürfen zur Erhaltung ihrer vollen Funktionsfähigkeit und Betriebssicherheit einer laufenden Wartung und Überwachung. Bei Werkzeugmaschinen, Produktionsmaschinen und auch Druckmaschinen werden dazu meist Wartungsverträge abgeschlossen, so dass beim Ausfall oder bei Störungen an den Maschinen sofort ein entsprechender Servicetechniker des Herstellers oder eines Servicedienstleisters zur Verfügung steht. Dies ist wichtig, da diese teuren Maschinen meist rund um die Uhr betrieben werden, um ihre hohen Investitionskosten zu amortisieren. Auch ohne Vorliegen eines solchen Wartungsvertrages benötigt der Maschinenbetreiber bei schwerwiegenden Störungen oder Reparaturen die Unterstützung durch Techniker des Herstellers oder eines externen Servicedienstleisters. Der Einsatz von Servicepersonal vor Ort ist jedoch sowohl für den Servicedienstleister oder Hersteller als auch für den Kunden mit hohen Kosten verbunden. Es wurden daher bereits in der Vergangenheit einige Versuche unternommen, Service- und Wartungsdienstleistungen soweit möglich über Fernwartung durchzuführen. Aus der DE 101 54 349 A1 ist ein Ver-fahren zur Übertragung von Daten einer Druckmaschine und eine Diagnosevorrichtung für eine Druckmaschine bekannt. Es geht dabei darum, die laufenden Betriebsdaten einer Druckmaschine mit in einem Rechner der Druckmaschine abgespeicherten Schwellwerten zu vergleichen und bei Überschreiten, Unterschreiten oder Erreichen der abgespeicherten Schwellwerte die davon betroffenen Daten automatisch zu einer örtlich entfernten Recheneinheit z. B. beim Hersteller der Druckmaschine zu übertragen. Der Rechner der Druckmaschine kann dabei auch den Ausfall einzelner Bauteile detektieren und die Daten für das ausgefallene Bauteil an den Rechner beim Hersteller oder Servicedienstleister übertragen. Ist die Maschinenlogik zur Vorhersage von Ausfällen in der Lage, so kann die Mitteilung auch schon vor einem konkreten Ausfall erfolgen. Die Nutzung dieses Wartungssystem ermöglicht vor allen Dingen eine automatische Benachrichtigung des Herstellers oder Servicedienstleisters unabhängig vom Einfluss des Maschinenbetreibers. Dazu ist es erforderlich, dass die Serviceverantwortung durch die Regelung im Vertrag vollständig beim Servicedienstleister oder Maschineiibetreiber liegt. In der Praxis ist das jedoch meist nicht der Fall, da der Maschinenbediener oder Servicepersonal beim Maschinenbetreiber meist arbeitsteilig eine aufgetretene Störung mit dem Maschinenhersteller beheben. Für die Abwicklung von Zugriffen des Dienstleisters oder Herstellers auf den Rechner der Druckmaschine sind jedoch keine Abläufe vorgegeben. Außer der Anforderung von Servicepersonal und Anforderung von Ersatzteilen gibt die DE 101 54 349 A1 keinen Hinweis darauf, wie der Betreiber der Maschine bei Servicemaßnahmen weiterhin unterstützt werden kann. Für die Abwicklung von Zugriffen des Dienstleisters oder Herstellers auf den Rechner der Druckmaschine sind jedoch keine Abläufe vorgegeben.

Die Patentschrift US 5,335,048 betrifft ein Wartungssystem für Kopierer. Die Kopierer sind über ein Telefonmodem an einen entfernt gelegenen Wartungsrechner angeschlossen, um mit diesem Daten austauschen zu können. Auf diese Art und Weise können ein oder mehrere Kopiergeräte ferngewartet werden. Beim Datenaustausch zwischen Kopierer und Wartungsrechner werden zunächst Wartungsdaten vom Kopierern an den Wartungsrechner übertragen. Der Wartungsrechner führt dann eine automatische Diagnose durch, um den Zustand der Kopierer zu überprüfen. Dabei wird zum Beispiel das Fehlen von Betriebsmitteln festgestellt. Im Gegenzug überträgt der Wartungsrechner Servicedaten an den jeweiligen Kopierer. Außerdem überträgt der Wartungsrechner Daten, welche Servicepersonal am Kopierer durch auszuführende Arbeiten führen. Diese Hilfe zur Ausführung der notwendigen Arbeiten wird dabei auf einem Display angezeigt, so dass das Servicepersonal nach den Vorgaben der Anzeige auf dem Display schnell und passend arbeiten kann. Des Weiteren berechnet der Wartungsrechner auf Basis der Informationen weiterer im Einsatz befindlicher Kopierer effektive und neue Maßnahmen, um Probleme in der Zukunft zu lösen, und versendet so auch die passenden Hilfsdaten, welche dann das Servicepersonal durch ihre Arbeiten führen. Auf diese Art und Weise werden die Arbeitsvorgänge des Servicepersonals an den Kopierern ständig verbessert.

Aus der Patentschrift US 5,680,541 ist ein weiteres Diagnosesystem zur Wartung von Kopierern bekannt. Auch hier sind mehrere Kopierer über eine Datenverbindung an einen Fernwartungsrechner angeschlossen. Der Fernwartungsrechner ist wiederum an eine Wissensdatenbank angeschlossen, wobei in der Datenbank ständig die aufgetretenen Fehler analysiert und verbesserte Analysemaßnahmen berechnet werden. Die auf Basis der verbesserten Analysemaßnahmen durchgeführte Diagnose beinhaltet auch den Schritt, dass automatische Reparaturmaßnahmen durchgeführt werden, wenn dies möglich ist. In diesem Fall versendet der Fernwartungsrechner Daten an den betroffenen Kopierer, um die Maschine neu zu programmieren, um so Abhilfe zu schaffen.

Auch aus der Patentschrift US 5,303,005 geht ein Wartungssystem für bildproduzierende Geräte wie Kopierer hervor. Bei diesem Wartungssystem werden ebenfalls Daten zwischen dem Rechner eines bildproduzierenden Systems und einem Fernwartungsrechner übertragen. Dabei wird mit einer sogenannten Fehlertabelle gearbeitet, welche vom Fernwartungsrechner an einen zu wartenden Kopierer übertragen wird, wobei anhand dieser Fehlertabelle die Ursachen für den aufgetretenen Fehler am Kopierer analysiert werden. In diesem Fall arbeitet das Servicepersonal die Fehlertabelle ab, um herauszufinden, welche Ursachen der Fehler hat. Nach Beendigung der Reparaturarbeiten bestätigt das Servicepersonal seine Arbeiten und gibt die entsprechenden Daten ein. Auf Basis der an den Fernwartungsrechner übertragenen und durchgeführten Arbeiten werden dann wiederum Informationen gewonnen, um für zukünftige Problemfälle die vorgeschlagenen Abhilfsmassnahmen verbessern zu können und wiederum an die jeweilige Maschine übertragen zu können.

Die Gebrauchsmusterschrift DE 299 00 996 U1 zeigt ein Verfahren zur Diagnose und Selbsthilfe zur Verwendung mit einem Druckmaschinenrechner und einem Zentralrechner, wobei der Zentralrechner über eine Einrichtung zur Datenfernübertragung mit dem Druckmaschinenrechner verbindbar ist. Im Speicher des Zentralrechners ist eine Vielzahl von Informationen zur Behebung von Störungen abgelegt.

Es ist Aufgabe der vorliegenden Erfindung, ein weiter verbessertes Verfahren zur Durchführung von Wartungs- und Servicevorgängen bei Maschinen zu schaffen. Die vorliegende Aufgabe wird erfindungsgemäss durch Patentanspruch 1 gelöst.

Vorteilhafte Ausgestaltungen der Erfindung sind den Unteransprüchen und den Zeichnungen zu entnehmen. Mittels der vorliegenden Erfindung ist eine vollautomatische Bearbeitung von Service- und Wartungsanfragen einer Maschine durch einen örtlich entfernten Fernwartungsrechner möglich. Bei der Maschine kann es sich z. B. um eine Druckmaschine in einem Druckereibetrieb handeln, welche über ein öffentlich zugängliches Kommunikationsnetzwerk wie das Internet mit einem Verwaltungsrechner beim Hersteller oder einem von diesem beauftragten Servicedienstleister verbunden ist. Verwaltungsrechner und Maschinenrechner sind gegenüber dem Internet durch Sicherheitsmassnahmen wie Firewalls geschützt. Zudem wird die Datenübertragung zwischen Maschinenrechner und Verwaltungsrechner verschlüsselt, um sie dem Zugriff Unbefugter zu entziehen. Meldet nun der Maschinenrechner der Druckmaschine aufgrund protokollierter Fehler oder Störungsmeldungen einen entsprechenden Wartungs- und Servicebedarf, so werden die entsprechenden Daten über das Internet an den Verwaltungsrechner übertragen. Dieser Verwaltungsrechner empfängt sämtliche Serviceanfragen von allen Maschinen, welche der Hersteller oder Servicedienstleister betreut.

Es ist, ist vorgesehen, dass Service- oder

Wartungsbedarf vom Rechner über das öffentlich zugängliche Kommunikationsnetz an den Verwaltungsrechner gemeldet wird und dass der Verwaltungsrechner anhand wenigstens einer empfangenen Fehlermeldung eine Checkliste zur Abarbeitung der notwendigen Service- und Wartungsmassnahmen erstellt und an den Rechner der Maschine versendet. Auch in diesem Fall wird mittels des Rechners der Maschine eine Service- oder Wartungsanfrage über das Internet an den Verwaltungsrechner des Herstellers oder Servicedienstleisters geschickt. Die empfangene Fehlermeldung enthält zum einen eindeutige Identifikationsdaten der betroffenen Maschine und ermöglicht so die Ermittlung von Maschinentyp und Baureihe sowie anderer maschinenspezifischer Daten durch den Verwaltungsrechner. Der Verwaltungsrechner hält zudem in einer zentralen Datenbank eine Fehlertabelle vor, welche für alle zu wartenden Maschinen jeweils hinterlegt ist. In Abhängigkeit der erkannten Maschine und der empfangenen Fehlermeldung kann der Verwaltungsrechner dann eine Checkliste zusammenstellen, welche die notwendigen Service- und Wartungsmassnahmen zur Behebung des Fehlers umfasst. Die so erstellte Checkliste wird dann vom Verwaltungsrechner über das Internet an den Maschinenrechner zurückgeschickt. Mittels Abarbeitung der erstellten Checkliste auf dem Maschinenrechner können dann die gemeldeten Fehler und Störungen behoben werden. Die empfangene Checkliste kann auch auf dem Rechner der Maschine für weitere Wartungs- und Servicevorgänge abgespeichert werden. So kann auch eine Diagnose und Fehlerbearbeitung stattfinden, ohne dass eine aktualisierte Checkliste erstellt und vom Verwaltungsrechner versendet wurde.

In einer Ausgestaltung der Erfindung ist vorgesehen, dass die Checkliste Massnahmen zur Selbsthilfe beinhaltet und dass diese Selbsthilfemassnahmen auf einer Anzeigevorrichtung des Rechners der Maschine angezeigt werden. In diesem Fall wird die Durchführung der vom Wartungsrechner zusammengestellten Massnahmen dem Bedienpersonal überlassen. Die übermittelte Checkliste wird am Bildschirm des Maschinenrechners dargestellt und kann so das Bedienpersonal durch die entsprechenden Massnahmen zur Fehler- und Störungsbehebung leiten. Die erfolgreiche Abarbeitung der Checkliste wird jeweils lokal durch den Rechner dokumentiert und als Information wiederum dem Verwaltungsrechner zur Verfügung gestellt. Das Verfahren der zentralen Bereitstellung von störfallbezogenen Checklisten bietet den Vorteil, dass diese zentral stets aktuell gehalten werden können und dass sich die Information über die Abarbeitung von Checklisten zu deren automatischer Verbesserung einsetzen lässt.

Eine weitere Ausgestaltung der Erfindung zeichnet sich dadurch aus, dass die an den Rechner der Maschine gesendete Checkliste von diesem selbsttätig abgearbeitet wird. In diesem Fall stellt die Checkliste einen Datensatz dar, welcher vom Maschinenrechner als Programm zur erweiterten Störungsdiagnose oder zur Störungsbehebung verarbeitet werden kann. In diesem Fall muss das Bedienpersonal bei der Behebung der Störungs- oder Fehlermeldung nicht eingreifen, da die Abarbeitung der übermittelten Checkliste automatisch durch den Maschinenrechner geschieht. Die Abarbeitung der Checkliste kann jedoch zusätzlich oder alternativ auch vom Verwaltungsrechner aus gesteuert werden. In diesem Fall werden die einzelnen Wartungsschritte der Checkliste zwar ebenfalls auf dem Maschinenrechner ausgeführt, die Auslösung der einzelnen Schritte auf der Checkliste wird vom Verwaltungsrechner gesteuert. Sollte der Verwaltungsrechner während des Abarbeitens der Checkliste eine bessere und aktuellere Checkliste berechnet haben, so kann der Verwaltungsrechner die Abarbeitung der bisherigen Checkliste abbrechen und die verbesserte Checkliste an den Maschinenrechner senden und dort verwenden.

Es ist des Weiteren vorgesehen, dass die Ausführung der Checkliste auf dem Verwaltungsrechner oder dem Rechner der Maschine protokolliert wird. Die Abarbeitung der einzelnen Schritte der Checkliste kann unter Umständen zu weiteren Fehlern oder zumindest zur Veränderung von Einstellungen an der Maschine führen. Um bei später auftretenden Problemen gegebenenfalls die korrekte Abarbeitung der übermittelten Checkliste beweisen zu können, kann diese entweder auf dem Rechner der Maschine oder auf dem Verwaltungsrechner aber auch auf beiden Rechnern entsprechend protokolliert werden. Auf diese Art und Weise ist sowohl für den Kunden als auch für den Hersteller eine spätere Überprüfung von durchgeführten Wartungsmassnahmen problemlos möglich. Dies ist insbesondere im Hinblick auf etwaige Garantieansprüche und Haftungsfälle sinnvoll.

Erfindungsgemäss ist vorgesehen, dass die auf dem Rechner abgespeicherte Fehlertabelle durch Datenübertragung von dem Verwaltungsrechner aus aktualisiert wird. Grundsätzlich wird der Maschinenrechner mit einer vorinstallierten Fehlertabelle ausgeliefert. Mittels dieser Tabelle kann der Maschinenrechner entscheiden, ob ein festgestellter Fehler überhaupt an den Verwaltungsrechner gemeldet werden muss, oder ob es ausreicht, die Störung nur lokal z. B. auf dem Bildschirm der Maschine anzuzeigen. Aufgrund von Erkenntnissen bei ähnlichen aufgetretenen Fehlern und Problemen kann es jedoch sinnvoll sein, diese Fehlertabelle im Laufe der Zeit zu überarbeiten. Dies geschieht vorzugsweise über den Verwaltungsrechner beim Hersteller oder Servicedienstleister, wo sämtliche in der Vergangenheit angefragten Wartungs- und Serviceanfragen abgespeichert und statistisch ausgewertet werden. Aufgrund dieser Auswertungen können die Fehlertabellen für die jeweiligen Maschinentypen entsprechend optimiert werden und dann über ein Kommunikationssystem wie das Internet an den Maschinenrechner zurück übertragen werden, wo sie die bisherige abgespeicherte Fehlertabelle ersetzen. Es ist somit möglich, bei künftigen Wartungsvorgängen von Problemlösungen in der Vergangenheit bei gleichen oder ähnlichen Maschinen zu profitieren.

Neben der automatischen Auslösung von Service- und Wartungsanfragen beim Verwaltungsrechner können diese Anfragen auch manuell vom Bedienpersonal über eine Tastatur oder den Touchscreen des Maschinenrechners erfolgen. Aber auch bei einer automatischen Anfrage können auf dem Rechner der Maschine Quittierungselemente vorhanden sein, von deren Betätigung durch das Bedienpersonal die Durchführung der mittels der Checkliste übermittelten Wartungs- und Servicevorgänge abhängt. Auf diese Art und Weise behält das Bedienpersonal weiterhin die Kontrolle darüber, ob ihm vorgeschlagene Wartungs- und Servicemassnahmen tatsächlich automatisch durchgeführt werden sollen, oder ob diese lieber verworfen werden. Damit wird eine Bevormundung von Kunden vermieden, und es ist trotzdem möglich, dem Kunden den Komfort einer vollautomatischen Service- oder Wartungsmassnahme über das Internet zu ermöglichen. Der Rechner der Maschine kann aber auch so konfiguriert sein, dass keine Quittierung erforderlich ist und dass die Wartungs- und Servicevorgänge mittels der Checkliste automatisch vor sich gehen.

Die vorliegende Erfindung wird nachfolgend anhand mehrerer Figuren näher beschrieben und erläutert. Es zeigen:
Figur 1 : ein erfindungsgemässes Wartungs- und Servicesystem bestehend aus Maschinenrechner und Verwaltungsrechner sowie einem an den Verwaltungsrechner angeschlossenen Vertragsverwaltungssystem,
Figur 2 : ein erfindungsgemässes Service- und Wartungssystem bestehend aus Maschinenrechner und Verwaltungsrechner sowie ein an den Verwaltungsrechner angeschlossenes Analysesystem,
Figur 3 : die Übertragung von Checklisten und Hilfsangeboten und
Figur 4 : die Übertragung von einer Auftragsbestätigung an den Maschinenrechner.

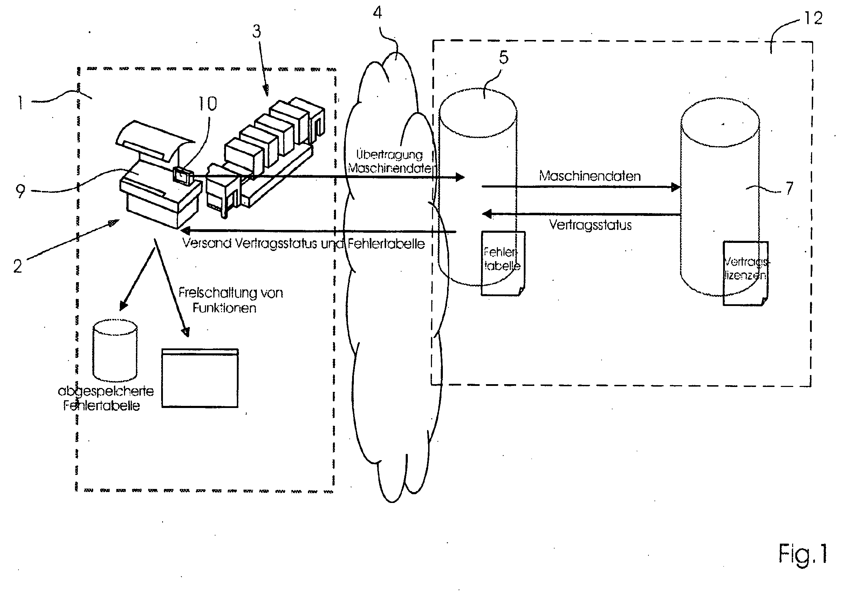

In Figur 1 ist im linken Bereich schematisch der Bereich einer Druckerei 1 abgebildet, in welcher eine oder mehrere Maschinen 3 zur Verarbeitung von Bedruckstoffen vorhanden sind. Die Druckerei 1 in Figur 1 verfügt beispielhaft über eine Druckmaschine 3 sowie einen Steuerstand 2, welcher mit der Druckmaschine 3 kommuniziert. Der Steuerstand 2 beinhaltet einen Maschinenrechner 9 sowie eine Anzeigevorrichtung 10 zur Darstellung der Abläufe und Bedienvorgänge. Mittels des Steuerstands 2 kann das Bedienpersonal die Druckmaschine 3 überwachen und bedienen. Der Maschinenrechner 9 in Figur 1 des Steuerstands 2 kann ein entsprechend programmierter herkömmlicher PC sein, welcher mit den Steuerungseinrichtungen der Druckmaschine 3 kommuniziert. Der Maschinenrechner 9 im Steuerstand 2 ist über eine Firewall mit dem Internet 4 verbunden und kann darüber Verbindung mit einem zentralen Verwaltungsrechner 5 beim Hersteller 12 der Maschine Kontakt aufnehmen. Der zentrale Verwaltungsrechner 5 ist ebenfalls durch eine Firewall gesichert ans Internet 4 angeschlossen und ist entweder beim Hersteller 12 der Druckmaschine 3 angesiedelt oder bei einem entsprechenden Service- und Wartungsdienstleister. Der Verwaltungsrechner 5 befindet sich somit örtlich getrennt von dem Maschinenrechner 9 in der Druckerei 1.

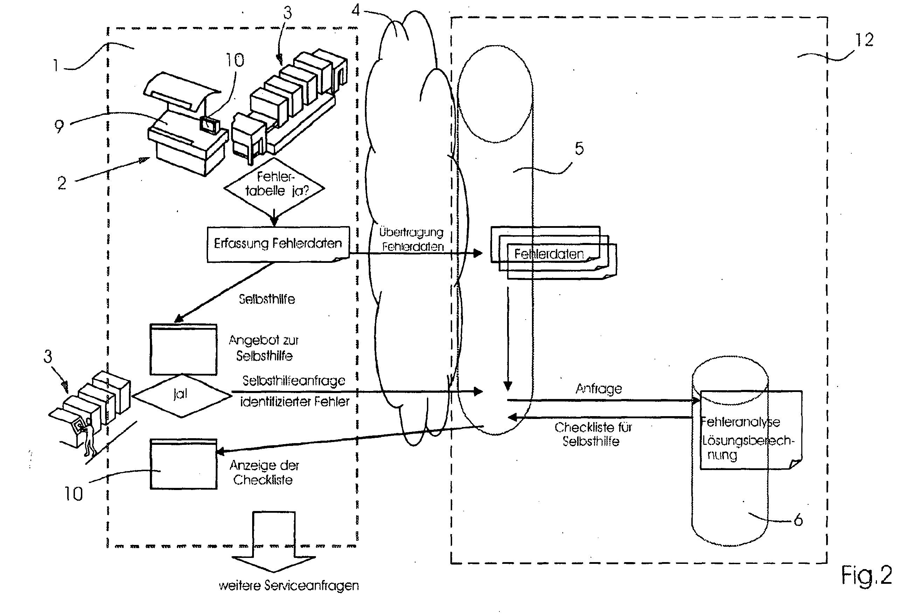

Die Ausführungsform in Figur 1 ermöglicht Auswahlmöglichkeiten von Wartungs- und Servicevorgängen in Abhängigkeit der von der Druckerei 1 erworbenen Vertragslizenzen. An den Verwaltungsrechner 5 beim Hersteller oder Servicedienstleister ist in Figur 1 ein Vertragsverwaltungssystem 7 angeschlossen, welches es dem Verwaltungssystem 5 ermöglicht, den Vertragsstatus der Druckerei 1 online zu überprüfen. Bei Inbetriebnahme der Maschine 3, spätestens jedoch wenn eine Fehler- oder Störungsmeldung an den Verwaltungsrechner 5 gemeldet werden soll, werden die Daten zur Identifizierung der Druckmaschine 3 an das Vertragsverwaltungssystem 7 weitergeleitet, welches diese wiederum mit den hinterlegten Lizenzverträgen vergleicht. Wenn die Druckerei 1 nur eine bestimmte Wartungslizenz erworben hat, so stellt das Vertragsverwaltungssystem 7 dies durch Vergleich mit den hinterlegten Vertragsdaten fest und meldet dies dem Verwaltungssystem 5. In diesem Fall wird das Verwaltungssystem 5 nur die dem jeweiligen Vertragsstatus entsprechende Abhilfe an den Maschinenrechner 9 der Druckmaschine 3 senden, so dass auch nur die dem jeweiligen Vertragsstatus entsprechenden Funktionen und Wartungs- bzw. Servicevorgänge an der Druckmaschine 3 frei geschaltet werden. Wenn der Vertragsstatus z. B. nur die Selbsthilfe unter Angabe einer entsprechenden Fehlerbeschreibung vorsieht, so kann das Bedienpersonal der Druckmaschine 3 keine Checklisten oder ein automatisches Checkprogramm abrufen. Falls das Problem mit der Selbsthilfe nicht zu lösen ist, so kann dem Bedienpersonal aber die Möglichkeit gegeben werden, über das System am Maschinenrechner 9 der Druckmaschine 3 und eine entsprechende Taste automatisch Servicepersonal des Herstellers oder des Servicedienstleisters anzufordern. Von den im Vertragsverwaltungssystem 7 hinterlegten Daten kann auch die übermittelte Fehlertabelle abhängig sein, welche in Abhängigkeit der Vertragsdaten entsprechende Eskalationsstufen enthält. Bei nicht vorhandenen Vertragslizenzen werden die entsprechenden Eskalationsstufen dann nicht mit übertragen, so dass diese auf dem Maschinenrechner 9 der Druckmaschine 3 auch nicht ausgeführt werden können. Auch bei dieser Ausführungsform wird die Fehlertabelle im Speicher des Maschinenrechners 9 der Druckmaschine 3 abgespeichert. Das Verfahren der Ausführungsform in Fig. 1 kann den Verfahren in den Figuren 2 bis 4 einmalig oder mehrmalig vorausgehen.

An den Verwaltungsrechner 5 in Fig. 2 ist außerdem ein Analyserechner 6 angebunden, wobei der Analyserechner 6 auch in den Verwaltungsrechner 5 integriert sein kann. Der Maschinenrechner 9 der Druckmaschine 3 überwacht ständig alle Betriebsvorgänge und speichert etwaige Störungen und Fehler entsprechend einer im Maschinenrechner 9 hinterlegten Vorschrift ab. Diese Vorschrift enthält eine Fehler- oder Eskalationstabelle, anhand derer der Maschinenrechner 9 entscheiden kann, in welche Kategorie eine Fehler-oder Störungsmeldung einzuordnen ist. Diese Fehlertabelle vergleicht der Maschinenrechner 9 ständig mit Fehler- oder Störungsmeldungen der Druckmaschine 3. Falls ein Fehler oder eine Störungsmeldung als entsprechend schwerwiegend eingestuft ist, wird diese Fehlermeldung und etwaige zugehörige weitere Daten über das Internet 4 an den Verwaltungsrechner 5 übertragen. Mit diesen Fehlerdaten werden gleichzeitig Maschinendaten der Druckmaschine 3 sowie eine eindeutige Identifizierung der Maschine 3 übertragen, so dass der Verwaltungsrechner 5 sofort weiß, welche Maschine 3 bei welchem Kunden in welcher Druckerei 1 die entsprechende Fehlermeldung abgesetzt hat. Falls die festgestellte Fehlermeldung oder Störung nicht so schwerwiegend ist, kann auf die Datenübertragung an den Verwaltungsrechner 5 verzichtet werden. In diesem Fall wird die Fehlermeldung lediglich auf der Anzeigevorrichtung 10 des Steuerstands 2 angezeigt, so dass das Bedienpersonal gegebenenfalls selbst reagieren kann. Wenn aufgrund der hinterlegten Fehlertabelle jedoch entschieden wurde, den Fehler an den Verwaltungsrechner 5 zu übertragen, so wird dieser in dem angeschlossenen Analysesystem 6 entsprechend einklassifiziert, und es werden Abhilfemaßnahmen berechnet. Zur Berechnung der Abhilfemaßnahmen und zur Einklassifizierung der empfangenen Störungs- und Fehlermeldung kann das Analysesystem 6 auf ähnliche Vorkommnisse in der Vergangenheit zugreifen. Auf diese Art und Weise werden die Einklassifizierung und die Berechnung der Abhilfemaßnahmen kontinuierlich verbessert. Nach der Berechnung der Abhilfemaßnahmen wird eine entsprechende Checkliste vom Verwaltungsrechner 5 über das Internet 4 an den Maschinenrechner der Druckmaschine 3 gesendet. Diese Checkliste wird dann auf der Anzeigevorrichtung 10 des Maschinenrechners 9 in der Druckerei 1 angezeigt, wobei diese Checkliste vom Bedienpersonal der Druckmaschine 3 entsprechend abgearbeitet werden kann. Die Abarbeitung einzelner Schritte der angezeigten Checkliste ist dabei vom Bedienpersonal über die Tastatur des Maschinenrechners 9 oder einen als Touchscreen ausgeführten Bildschirm der Anzeigeeinrichtung 10 zu quittieren. Wenn die Checkliste korrekt abgearbeitet wurde, sollte der Fehler dann entsprechend behoben sein.

Die Zusendung einer Checkliste stellt jedoch nur eine von mehreren Möglichkeiten zur Durchführung von Service- und Wartungsvorgängen dar. Zunächst kann dem Bedienpersonal auch einfach nur der zu behebende Fehler angezeigt werden, welches daraufhin zur Selbsthilfe greift, wenn das entsprechende Wissen beim Bedienpersonal vorhanden ist. Sollte die Inanspruchnahme der Selbsthilfe vom Bedienpersonal quittiert werden, so werden zunächst keine weiteren Maßnahmen durch den Verwaltungsrechner 5 eingeleitet. Die dritte Alternative befindet sich genau am entgegen gesetzten Ende der Automatisierungsskala, hier wird die übertragene Checkliste auf dem Maschinenrechner 9 automatisch abgearbeitet und entsprechende Fehler vom Maschinenrechner 9 der Druckmaschine 3 alleine behoben oder im Zusammenspiel mit weiterer Unterstützung des Verwaltungsrechners 5 korrigiert. In diesem Fall erfährt das Bedienpersonal lediglich über die Anzeigevorrichtung 10 des Steuerstands 2, dass eine Wartungs- und Servicemaßnahme vorgenommen wird, Eingriffe des Bedienpersonals sind jedoch nicht erforderlich. Auf Wunsch kann das Bedienpersonal zwischen den drei genannten Abhilfevorgängen über entsprechende Bedieneingaben am Steuerstand 2 wählen.

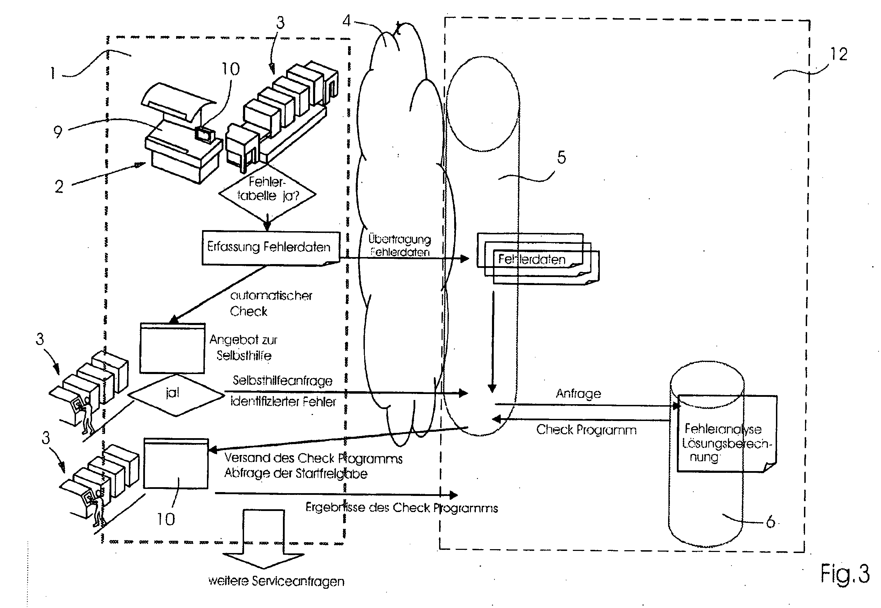

Figur 3 zeigt näher den Ablauf, wenn das Bedienpersonal die automatische Abarbeitung einer Checkliste ausgewählt hat. In diesem Fall betätigt das Bedienpersonal am Steuerstand 2 eine entsprechende Taste, welche den automatischen Checkvorgang auslöst. Durch diesen automatischen Vorgang wird vom Verwaltungsrechner 5 ein entsprechendes mittels des Analysesystems 6 aktualisiertes in Abhängigkeit der an den Verwaltungsrechner 5 gesendeten Fehlermeldung erstelltes Checkprogramm angefordert und über das Internet 4 zum Maschinenrechner 9 übertragen. Dieses Checkprogramm ist so ausgestaltet, dass es die gemeldeten Fehler näher analysieren kann und möglichst auch beheben kann. Das Checkprogramm wird dazu auf dem Maschinenrechner 9 der Druckmaschine 3 abgearbeitet. Der Ablauf des Checkprogramms auf dem Maschinenrechner 9 liefert entsprechende Resultate, welche wiederum über das Internet 4 an den Verwaltungsrechner 5 gesendet werden und auf welche dann auch das Analysesystem 6 Zugriff erhält, um künftige ähnliche Wartungs- und Servicevorgänge verbessern zu können. Falls mit der Abarbeitung des Checkprogramms die gemeldeten Fehler und Störungen behoben werden konnten, wird dies dem Bedienpersonal am Steuerstand 2 entsprechend angezeigt. Sollten weitere Maßnahmen notwendig sein, so wird auch dies auf dem Steuerstand 2 entsprechend angezeigt und es wird automatisch entsprechendes Servicepersonal über den Verwaltungsrechner 5 angefordert, um die verbleibenden Probleme zu beheben, falls dies erforderlich sein sollte. Die Ausführungsform gemäß der Figuren 2 und 3 kann auch mit dem System in Figur 1 kombiniert werden.

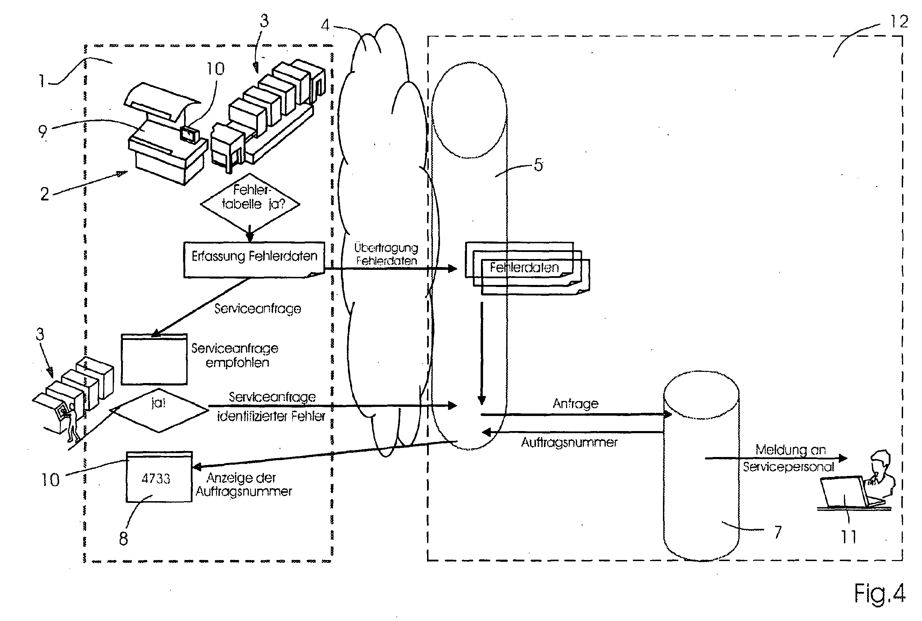

Die Ausführungsform gemäß Figur 4 beschreibt die erforderliche Beauftragung des Herstellers oder Servicedienstleisters für Wartungs- und Servicearbeiten. In diesem Fall verfügt der Verwaltungsrechner 5 beim Maschinenhersteller 12 oder beim Servicedienstleister über die Möglichkeit, auf Daten eines Vertragsverwaltungssystems 7 zurückzugreifen. Wenn eine Fehlermeldung in der Maschine 3 auftritt, so wird diese wie gehabt entsprechend klassifiziert und wenn die Notwendigkeit des Eingriffs durch den Verwaltungsrechner 5 besteht, über das Internet 4 an diesen übertragen. Parallel dazu kann am Steuerstand 2 der Druckmaschine 3 vom Bedienpersonal auch über eine Eingabetaste eine entsprechende Servicedienstleistung manuell angefordert werden. Die so angeforderte Servicedienstleistung wird ebenfalls als Wunsch über das Internet 4 an den Verwaltungsrechner 5 übertragen. Durch die kodiert übertragene Fehlermeldung im Verwaltungsrechner 5 ist die Identität der zu wartenden Druckmaschine 3 bekannt. Fehlermeldung und Identität werden dann im Vertragsverwaltungssystem 7, wo die Kundendaten gespeichert sind, zu einer Auftragsbestätigung 8 zusammengeführt. Diese wiederum wird über den Verwaltungsrechner 5 und das Internet 4 zurück zum Maschinenrechner 9 der Druckmaschine 3 übertragen und dort auf dem Bildschirm 10 angezeigt. Diese Auftragsbestätigung 8 enthält eine eindeutig zu vergebende Auftragsnummer, so dass das Bedienpersonal der Druckmaschine 3 bei Rückfragen oder bei weiteren auftretenden Problemen grundsätzlich den Bezug auf den laufenden Serviceauftrag herstellen kann. Wenn die durchzuführende Service- und Wartungsmaßnahme erfolgreich abgeschlossen wurde, kann dem Bedienpersonal auf einer Anzeigeeinrichtung des Steuerstands 2 unter der Auftragsnummer 8 der erfolgreiche Abschluss der Servicemaßnahme mitgeteilt werden. Auf diese Art und Weise wird das Bedienpersonal ständig auf dem Laufenden gehalten, was laufende Serviceanfragen und Wartungen an der Maschine 3 betrifft. Falls Service- und Wartungsanfragen durch das Verwaltungssystem 5 nicht gelöst werden können, so kann zusätzlich über das Vertragsverwaltungssystem 7 ein entsprechender Servicetechniker eingeschaltet werden, immer unter der Voraussetzung, dass die Einschaltung eines Servicetechnikers in der entsprechenden Vertragslizenz des Druckereibesitzers 1 beinhaltet ist. Nur wenn der Abgleich der gesendeten Fehlerdaten einschließlich der Identifikation mit den auf den Vertragsverwaltungssystem 7 hinterlegten Daten eine solche Berechtigung ergibt, wird ein entsprechender Servicetechniker eingeschaltet. Andernfalls steht diese Funktion der nachfragenden Druckerei 1 nicht zur Verfügung.

### Bezugszeichenliste

- 1: Druckerei
- 2: Steuerstand
- 3: Druckmaschine
- 4: Internet
- 5: Verwaltungsrechner
- 6: Analyserechner
- 7: Vertragsrechner
- 8: Auftragsnummer
- 9: Maschinenrechner
- 10: Bildschirm
- 11: Servicetechniker
- 12: Hersteller

## Patentansprüche

1. Verfahren zur Durchführung von Wartungs- oder Servicevorgängen bei Maschinen (3), welche über wenigstens einen Rechner (9) verfügen, wobei der Rechner (9) der Maschine (3) über ein öffentlich zugängliches Netzwerk (4) mit einem Verwaltungsrechner (5) kommuniziert,
wobei der Service- oder Wartungsbedarf vom Rechner (9) über das öffentlich zugängliche Kommunikationsnetz (4) an den Verwaltungsrechner (5) gemeldet wird und wobei der Verwaltungsrechner (5) anhand wenigstens einer empfangenen Fehlermeldung eine Checkliste zur Abarbeitung der notwendigen Service- und Wartungsmaßnahmen erstellt und an den Rechner (9) der Maschine (3) versendet, wobei auf dem Rechner (9) der Maschine (3) eine Fehlertabelle abgespeichert ist, und wobei die auf dem Rechner (9) der Maschine (3) abgespeicherte Fehlertabelle durch Datenübertragung von dem Verwaltungsrechner (5) aus aktualisiert wird, wobei der Rechner (9) der Maschine (3) anhand der Fehlertabelle über die Meldung einer Störung an den Verwaltungsrechner (5) oder/und die Anzeigeeinrichtung (10) des Rechners (9) der Maschine (3) entscheidet,
**dadurch gekennzeichnet,**
**dass** der Rechner (9) der Maschine (3) anhand der Fehlertabelle entscheidet, ob die Meldung einer Störung an den Verwaltungsrechner (5) gemeldet werden muss, oder ob es ausreicht, die Meldung einer Störung nur lokal auf der Anzeigeeinrichtung (10) des Rechners (9) der Maschine (3) anzuzeigen.

2. Verfahren nach Anspruch 1,
**dadurch gekennzeichnet,**
**dass** die Checkliste Maßnahmen zur Selbsthilfe beinhaltet und dass diese Selbsthilfemaßnahmen auf einer Anzeigevorrichtung (10) des Rechners (9) der Maschine (3) angezeigt werden.

3. Verfahren nach Anspruch 1 oder 2,
**dadurch gekennzeichnet,**
**dass** die an den Rechner (9) der Maschine (3) gesendete Checkliste von diesem selbsttätig abgearbeitet wird.

4. Verfahren nach einem der Ansprüche 1 bis 3,
**dadurch gekennzeichnet,**
**dass** die Ausführung der Checkliste auf dem Rechner (9) der Maschine (3) durch den Verwaltungsrechner (5) gesteuert wird.

5. Verfahren nach einem der Ansprüche 1 bis 4,
**dadurch gekennzeichnet,**
**dass** die Ausführung der Checkliste auf dem Verwaltungsrechner (5) oder dem Rechner (9) protokolliert wird.

6. Verfahren nach einem der Ansprüche 1 bis 5,
**dadurch gekennzeichnet,**
**dass** der Verwaltungsrechner (5) Fehlermeldungen, Service- oder Wartungsanfragen von an das System angeschlossenen Maschinen (3) abspeichert, dass die abgespeicherten Meldungen ausgewertet werden und dass in Abhängigkeit der Auswertungsergebnisse die auf dem Rechner (9) der Maschinen (3) hinterlegte Fehlertabelle durch den Verwaltungsrechner (5) verändert wird.

7. Verfahren einem der Ansprüche 1 bis 6,
**dadurch gekennzeichnet,**
**dass** für jeden Maschinentyp vom Verwaltungsrechner (5) die aktuelle Fehlertabelle bereitgehalten wird.

8. Verfahren nach einem der Ansprüche 1 bis 7,
**dadurch gekennzeichnet,**
**dass** die Checkliste auf dem Rechner (9) der Maschine (3) abgespeichert ist und für weitere Wartungs- und Servicevorgänge vom Rechner (9) verwendet wird.

9. Verfahren nach einem der vorhergehenden Ansprüche,
**dadurch gekennzeichnet,**
**dass** bei Erfordernis eines Service- oder Wartungsvorgangs mittels eines Bedienelements des Rechners (9) die Möglichkeit zur Anforderung eines Service- oder Wartungsvorgangs beim Verwaltungsrechner (5) gegeben wird.

10. Verfahren nach einem der vorhergehenden Ansprüche,
**dadurch gekennzeichnet,**
**dass** die Durchführung von Wartungs- oder Servicevorgängen auf dem Rechner (9) der Maschine (3) von einer Quittierungseingabe durch Bedienpersonal abhängig ist.

11. Verfahren nach einem der vorhergehenden Ansprüche,
**dadurch gekennzeichnet,**
**dass** die Maschine (3) eine Druckmaschine ist.

## Claims

1. A method for carrying out maintenance or service operations on machines (3) provided with at least one computer (9), wherein the computer (9) of the machine (3) communicates with a management computer (5) over a publicly accessible network (4), wherein the maintenance and service requirement is reported from the computer (9) to the management computer (5) over the publicly accessible communications network (4), and wherein the management computer (5) compiles a checklist for processing required service and maintenance measures on the basis of at least one error message received and transmits the checklist to the computer (9) of the machine (3), wherein a fault table is stored on the computer (9) of the machine, and wherein the fault table stored on the computer (9) of the machine (3) is updated by data transmission from the management computer (5), wherein, based on the fault table, the computer (9) of the machine (3) decides whether to report a fault to the management computer (5) or/and to a display device (10) of the computer (9) of the machine (3),
**characterized in**
**that** based on the fault table, the computer (9) of the machine (3) decides whether a report of a fault needs to be reported to the management computer (5) or whether it is sufficient to display the report of a fault only locally on a display device (10) of the computer (9) of the machine (3).

2. The method according to claim 1,
**characterized in**
**that** the checklist comprises measures for self-help and that these self-help measures are displayed on a display device (10) of the computer (9) of the machine (3).

3. The method according claims 1 or 2,
**characterized in**
**that** the checklist transmitted to the computer (9) of the machine (3) is automatically processed by the computer (9) of the machine (3).

4. The method according to any one of claims 1 to 3,
**characterized in**
**that** the processing of the checklist on the computer (9) of the machine (3) is controlled by the management computer (5).

5. The method according to any one of claims 1 to 4,
**characterized in**
**that** the processing of the checklist is recorded on the management computer (5) or on the computer (9).

6. The method according to any one of claims 1 to 5,
**characterized in**
**that** the management computer (5) stores error messages, service or maintenance inquiries from machines (3) that are connected to the system, that the stored messages are evaluated, and that the fault table stored on the computer (9) of the machines (3) is revised by the management computer (5) on the basis of the evaluation results.

7. The method according to any one of claims 1 to 6,
**characterized in**
**that** the up-to-date fault table is made available by the management computer (5) for each machine type.

8. The method according to any one of claims 1 to 7,
**characterized in**
**that** the checklist is stored on the computer (9) of the machine (3) and is used by the computer (9) for further maintenance and service operations.

9. The method according to any one of the preceding claims,
**characterized in**
**that** when a service or maintenance operation is required, the possibility of requesting a service or maintenance operation from the management computer (5) is provided by means of a control element of the computer (9).

10. The method according to any one of the preceding claims,
**characterized in**
**that** the execution of maintenance or service operations on the computer (9) of the machine (3) is dependent on an acknowledgement input by operating personnel.

11. The method according to any one of the preceding claims,
**characterized in**
**that** the machine (3) is a printing press.

## Revendications

1. Procédé pour l'exécution d'opérations de service et de maintenance pour les machines (3) qui disposent au moins d'un ordinateur (9), ordinateur (9) de la machine (3) communiquant par un réseau (4) accessible, public à un ordinateur d'administration (5),
le besoin en service et/ou en maintenance étant annoncé par l'ordinateur (9) par le biais du réseau de communication (4) accessible public à l'ordinateur d'administration (5) et l'ordinateur d'administration (5) établissant au moins à l'aide d'un message d'erreur reçu, une check-liste pour l'exécution des mesures nécessaires de service et de maintenance pour l'envoyer à l'ordinateur (9) de la machine (3), un tableau d'erreurs stocké sur l'ordinateur (9) de la machine (3) étant actualisé par le transfert de données depuis l'ordinateur d'administration (5),
**caractérisé en ce que** l'ordinateur (9) de la machine (3) décide à l'aide du tableau d'erreurs de signaler une panne à l'ordinateur d'administration (5) ou/et à un dispositif d'affichage (10) de l'ordinateur (9) de la machine (3).

2. Procédé selon la revendication 1, **caractérisé en ce que** la check-liste contient des mesures auto-assistance et **en ce que** ces mesures d'auto-assistance sont affichées sur le dispositif d'affichage (10) de l'ordinateur (9) de la machine (3).

3. Procédé selon la revendication 1 ou 2, **caractérisé en ce que** l'ordinateur (9) de la machine (3) traite de manière autonome la check-liste qu'il a reçue.

4. Procédé selon l'une des revendications 1 à 3, **caractérisé en ce que** l'exécution de la check-liste sur l'ordinateur (9) de la machine (3) est commandée par l'ordinateur d'administration (5).

5. Procédé selon l'une des revendications 1 à 4, **caractérisé en ce que** l'exécution de la check-liste est protocollée sur l'ordinateur d'administration (5) ou l'ordinateur (9).

6. Procédé selon l'une des revendications 1 à 5, **caractérisé en ce que** l'ordinateur d'administration (5) stocke des messages d'erreur, des demandes de service ou de maintenance provenant des machines (3) raccordées au système, **en ce que** les messages stockés sont analysés et **en ce qu'**en fonction des résultats d'analyse, le tableau d'erreur déposé sur l'ordinateur (9) de la machine (3) est modifié par l'ordinateur d'administration (5).

7. Procédé selon l'une des revendications 1 à 6, **caractérisé en ce que** pour chaque type de machine, le tableau actuel d'erreurs est mis à disposition par l'ordinateur d'administration (5).

8. Procédé selon l'une des revendications 1 à 7, **caractérisé en ce que** la check-liste est stockée sur l'ordinateur (9) de la machine et est utilisée pour d'autres opérations de service et de maintenance par l'ordinateur (9).

9. Procédé selon l'une des revendications précédentes,
**caractérisé en ce qu'**en cas d'une opération de service ou de maintenance au moyen d'un élément de commande de l'ordinateur (9), une demande d'une opération de service ou de maintenance auprès de l'ordinateur d'administration (5)est possible.

10. Procédé selon l'une des revendications précédentes,
**caractérisé en ce que** l'exécution d'opération de maintenance et de service sur l'ordinateur (9) de la machine (3) dépend d'une entrée de validation par le personnel opérateur.

11. Procédé selon l'une des revendications précédentes,
**caractérisé en ce que** la machine (3) est une machine d'impression.
